Europäisches Patentamt

(19) European Patent Office

Office européen des brevets

(11) Publication number: **0 198 588**
**B1**

(12) EUROPEAN PATENT SPECIFICATION

(45) Date of publication of patent specification: **08.11.89**   (51) Int. Cl.⁴: **H 01 B 3/22**

(21) Application number: **86301610.1**

(22) Date of filing: **06.03.86**

(54) Compositions for the production of waterproof and gas tight cables.

(30) Priority: **13.03.85 FR 8503656**

(43) Date of publication of application:
  **22.10.86 Bulletin 86/43**

(45) Publication of the grant of the patent:
  **08.11.89 Bulletin 89/45**

(84) Designated Contracting States:
  **AT BE DE FR GB IT NL SE**

(56) References cited:
  **CA-A-1 015 481**
  **DE-A-2 320 254**
  **FR-A-2 161 047**
  **FR-A-2 268 053**

(73) Proprietor: **BP Chemicals Limited**
  **Belgrave House 76 Buckingham Palace Road**
  **London, SW1W 0SU (GB)**

(72) Inventor: **Berrier, Bernard**
  **c/o BP Chimie Société Anonyme, B.P. No. 2**
  **F-13117 Lavera (FR)**
  Inventor: **Ciardi, Claude**
  **c/o BP Chimie Société Anonyme, B.P. No. 2**
  **F-13117 Lavera (FR)**

(74) Representative: **Fawcett, Richard Fennelly et al**
  **BP INTERNATIONAL LIMITED Patents Division**
  **Chertsey Road**
  **Sunbury-on-Thames Middlesex, TW16 7LN (GB)**

## Description

The object of the present invention is compositions comprising liquid polybutenes and microcrystalline hydrocarbon waxes, intended mainly for the production of waterproof and gas tight cables.

The preparation of compositions comprising, on the one hand, polybutenes of a mean molecular mass by number of between 550 and 1400, and on the other hand microcrystalline hydrocarbon waxes with a low dielectric loss and a drop point of over 85°C, chosen from amongst waxes of the Fischer-Tropsch synthesis type, with a mean molecular mass by number of approximately 600 and/or polyethylene waxes of a mean molecular mass by number of between 3000 and 10000 is already known according to French Patent No. 1550138. These compositions are mainly suitable for the impregnation of fibrous materials intended for insulating the conductors of electric cables and capacitors, their assembly being produced in such a way that they cannot undergo any great mechanical stress. However, these compositions are not convenient for the production of waterproof and gas tight cables, this production normally consisting in filling the sheaths of these cables by injection with compositions in a pasty or liquid state. In fact, during the filling of these cables, the compositions penetrate between the sheaths and the various elements making up these cables, such as wires, fibres or bundles of wires or fibres, whilst undergoing relatively great mechanical stresses, especially high shearing stresses. These stresses generally have the effect of modifying certain physical properties of these compositions by partially destroying the crystal lattices and in particular of weakening their non-migrating properties, and in this way bringing about a considerable reduction in their tightness to water and gas of the cables thus produced.

In particular this phenomenon is revealed by the decrease in value of the drop point of compositions which have undergone mixing by pulverisation under special conditions, described in standards MF-T-60 132 and ASTM-D-127 relating to the measurement of penetrability of lubricant greases possibly subjected to intensive mixing. This mixing by pulverisation produces, in fact, approximately the same effects as physical treatment which may be undergone by the compositions during filling by injection of the cables. In point of fact it has been observed that this mixing by pulverisation produces, by a phenomenon similar to that observed during filling cable sheaths, a very notable decrease in the value of the drop point of these compositions, it being possible for the drop point value to become less than 80°C; beyond the temperature of the drop point, the material starts to flow, thus loosing a part of its non-migrating properties.

According to French Patent Application No. 2161047, it is already known to fill electric cables with a composition containing a polybutene, a polyethylene and a microcrystalline wax having a low melting point. It is also known according to the Canadian Patent No. 1015431 to fill telecommunications cables with a composition containing a poly(butene-1), a microcrystalline slack wax, a polyethylene, a silica and a wax selected amongst paraffin waxes, synthetic Fischer-Tropsch type waxes and natural waxes.

It has now been found that it is possible to avoid the defects referred to above and to prepare new compositions comprising liquid polybutenes and microcrystalline hydrocarbon waxes which are especially suitable for the production of waterproof and gas tight cables. These new compositions afford numerous advantages as compared with compositions known hitherto. In particular, they offer the advantage of not flowing at temperatures in the range 65°C to over 100°C, particularly after undergoing high mechanical stresses during their use.

The present invention therefore relates to compositions based on liquid polybutenes and microcrystalline hydrocarbon waxes, having a low dielectric loss, characterised in that they comprise:

(a) from 85 to 96 parts by weight of liquid polybutenes having a mean molecular mass by number comprised between 550 and 3000, and

(b) from 4 to 15 parts by weight of at least one microcrystalline hydrocarbon wax having a dielectric loss, measured at 100°C less than or equal to $5\times10^{-4}$ radian, having a mean molecular mass by number comprised between 650 and 2500 and a melting point, determined by differential enthalpy analysis, comprised between 80 and 150°C.

The melting point of the wax is measured by scanning differential enthalpy analysis after post-curing at 200°C, for 20 minutes followed by cooling at a rate of 16°C per minute down to 50°C and heating at a rate of 16°C per minute.

One may use polybutenes produced by cationic polymerisation of 1-butene or 2-butenes or of a mixture of 1-butene and 2-butenes. It is also possible to use a polybutene obtained by the copolymerisation of isobutene with 1-butene and/or 2-butenes, in particular by means of a catalyst of the Friedel-Crafts type, such as aluminium trichloride, boron trifluoride, tin or titanium tetrachlorides. One may also use polybutenes produced by the polymerisation of isobutene by means of a catalyst of the same type.

The polybutenes suitable for preparing compositions according to the invention occur in the form of more or less viscous liquids whose mean molecular mass by number, measured by osmometry or gel permeation chromatography, is comprised between 550 and 3000, preferably comprised between 800 and 1500. By way of example, one may use polybutenes sold by BP Chimie under the registered tradenames NAPVIS DE 3®, NAPVIS De 10®, NAPVIS DE30® or NAPVIS D 200®. The liquid polybutenes used according to the invention may have a density measured at 15°C generally comprised between 0.83 and 0.92.

The viscosity at 100°C of these liquid polybutenes may be comprised between about 30 and 8000 mm²/s, preferably is comprised between about 100 and 900 mm²/s. These liquid polybutenes also have dielectric properties such that these products can be used as insulators in electric cables; in particular their specific resistance measured at 100°C may be equal to or higher than $150 \times 10^{12}$ Ohm · cm and their dielectric losses measured at 100°C are less than or equal to $5 \times 10^{-4}$ radian.

The presence of microcrystalline hydrocarbon wax in the compositions according to the invention is of great importance, the choice of this wax being mainly determined by its physical characteristics. It has in fact appeared, after numerous researches, that using the waxes described above compositions can be obtained having a high thermal stability and non-migrating properties at relatively high temperatures, particularly above 90°C. Furthermore, these properties undergo little or no change under the effects of the stresses exerted during the use of such compositions in the production of cables, this advantage being acquired surprisingly without having to increase appreciably the viscosity in the pasty or liquid state of these compositions, which would in fact have had the harmful effect of rendering it particularly difficult if not impossible to use them for filling the cables. The cables thus produced from these new compositions, with remarkable non-migrating properties, can be used in particular under conditions where the ambient temperature is relatively high, especially in countries with a tropical climate.

The compositions according to the invention comprise from 4 to 15 parts by weight, preferably from 6 to 12 parts by weight of at least one microcrystalline hydrocarbon wax having a mean molecular mass by number, measured by osmometry or gel permeation chromatography, of between 650 and 2500, preferably between 800 and 2100. The use of a microcrystalline hydrocarbon wax having too low a mean molecular mass by number, especially a mean molecular mass by number below 650, would give compositions which after mixing by pulverisation would have a low dropping point value, so that the compositions injected into the cables might start migrating at relatively low temperatures. On the other hand, the use of a microcrystalline hydrocarbon wax having a mean molecular mass by number of over 2500 would give comparatively heterogeneous compositions by reason of the poor compatibility of this wax with the liquid polybutenes employed, and consequently compositions which, after filling of the cables or, in an equivalent manner, after mixing by trituration, would have a relatively low drop point value, generally diminished by over 50°C by comparison with that measured before mixing.

The microcrystalline hydrocarbon waxes employed in the compositions according to the invention must also have a melting point comprised between 80 and 150°C, preferably comprised between 100 and 130°C, this melting point being measured by scanning differential enthalpy analysis, after post-curing at 200°C, maintenance at this temperature for 20 minutes, cooling at a rate of 16°C per minute down to 50°C and heating at a rate of 16°C per minute. Similarly the use of a microcrystalline hydrocarbon wax having too low a melting point, notably below 80°C, would give compositions whose drop point value, measured in particular after mixing by trituration, would be too low.

The microcrystalline hydrocarbon waxes generally possess a crystalline phase having a relatively narrow distribution of the crystallite dimensions. This distribution may be characterised by a parameter called the distribution parameter, determined by the ratio between the width of the fusion peak at half-height and the maximum amplitude of this peak obtained by scanning differential enthalpy analysis. The microcrystalline hydrocarbon waxes preferred in the compositions according to the invention have a distribution parameter whose value is as low as possible, especially below 1.

The waxes used in the compositions of the invention generally possess a fusion enthalpy, of between about 80 and 270 J/g. This corresponds to a crystallinity level of between about 30 and 95%. These waxes also have a density measured at 25°C comprised between 0.92 and 0.97, preferably comprised between 0.94 and 0.96. The waxes occur at 100°C either in the form of a liquid having a comparatively high viscosity, especially a viscosity over 30 mm²/s, or preferably in the form of a solid.

The microcrystalline hydrocarbon waxes used in the compositions according to the invention must possess adequate purity, in order to be compatible with the normal electrical applications; their specific resistance measured at 100°C is preferably equal to or greater than $150 \times 10^{12}$ Ohm · cm and their dielectric losses measured at 100°C are preferably less than or equal to $5 \times 10^{-4}$ radian.

As microcrystalline hydrocarbon wax in the compositions according to the invention one may use either a wax obtained by a synthesis of the Fischer-Tropsch type, or a high or low density polyethylene wax, obtained by polymerisation of the ethylene, by copolymerisation of the ethylene with other alpha-olefins, or by breakdown of a polyethylene or ethylene copolymer with a high mean molecular mass by number.

The invention also relates to a process for the preparation of these compositions, which consists in performing the mixing of the liquid polybutenes with the microcrystalline hydrocarbon wax or waxes at a temperature comprised between 100 and 150°C, preferably comprised between 110 and 140°C.

Additives such as anti-oxidants may be added to these compositions, in a proportion which may reach as much as approximately 1% by weight in relation to these compositions. These anti-oxidants may be chosen from amongst a large number of compounds, especially phenol compounds, such as octadecyl 3 (3,5-ditertbutyl-4-hydroxyphenol) propionate, pentaerythrityl-tetrakis-3-(3,5 ditertbutyl-4-hydroxyphenol) propionate, 4-methyl-2,6-ditertbutylphenol, or tris-(2-methyl-4-hydroxy-5-tertbutyl phenol) butane.

The compositions of the invention not only have excellent non-migrating properties which are especially suited to the production of waterproof and gas tight cables, for use in a tropical climate in particular, but also remarkable bonding properties viz a viz metals and electrical insulators. It is also found that the density of these compositions undergoes only very slight change with the temperature, which makes it possible to avoid shrinkage, at the moment of cooling of the cables when filled with these compositions, which may be prejudicial to good tightness of the cables.

The compositions prepared according to the invention may be used mainly for the production of telecommunication cables, energy carrying cables such as electric cables and fibre-optic cables, for which applications and excellent tightness to water and gas is usually required. In particular these compositions may be employed for the production of telephone cables, complying in particular with the REA standard (United States Rural Electrification Administration) relating on the one hand to cables with solid insulation such as defined by the "REA Bulletin 347/67" of the 19th November 1984, and on the other hand to cables with expanded insulation such as defined by the "REA Bulletin 345/89" of the 1st February 1982. In view also of their excellent dielectric properties, these compositions may be employed in the production of cables for the transmission of high-frequency electrical signals. Moreover, these compositions may also be used as electrical insulators for the production of capacitors, cables and their accessories for connections.

Method for mixing by trituration of the compositions

This method is identical to that describing the work of the grease mixer recommended for carrying out the "cone penetration of lubricant greases" according to Standard NF-T-60132 or Standard ASTM-D-127, except for the fact that instead of subjecting the greases to 60 cycles, the compositions are subjected to 10 cycles.

The following non-restrictive examples illustrate the invention.

Example 1

The following are mixed at 120°C:

91.8 parts by weight of a liquid polybutene sold by BP Chimie under the tradename "NAPVIS DE 10®", having the following characteristics:

mean molecular mass by number measured by osmometry of 945,

viscosity measured at 100°C of 220 mm²/s,

density measured at 15°C of 0.89,

resistivity measured at 100°C of 1500×10¹² Ohm · cm,

dielectric losses measured at 100°C of less than or equal to 0.1×10⁻⁴ radian;

8 parts by weight of a microcrystalline hydrocarbon wax consisting essentially of polyethylene, having the following characteristics:

mean molecular mass by number measured by osmometry of 980,

melting point measured by scanning differential enthaply analysis of 111°C,

distribution parameter of the crystallite dimensions of 0.158,

fusion enthalpy of 238 J/g,

density measured at 25°C of 0.96,

0.2 parts by weight of an antioxidant of the phenol type sold by Ciba-Geigy under the tradename "IRGANOX 1076®".

After homogenisation and cooling to ambient temperature, the composition obtained possesses the following properties:

drop point, before mixing by trituration, 104°C,

drop point, after mixing by trituration, 100°C,

Viscosity measured at 120°C: 78 mm²/s,

penetration measured at 20°C: 50 l/10 mm,

resistivity measured at 23°C, over 1000×10¹⁵ ohm · cm,

resistivity measured at 100°C: 1200×10¹² Ohm · cm,

dielectric losses measured at 100°C: 0.2×10⁻⁴ radian,

dielectric losses measured at 23°C under 1 MHZ: 5.8×10⁻⁴ radian, and

dielectric constant, measured at 23°C under 1MHz: less than 2.3.

In particular it is found that the dropping point of the composition thus obtained diminishes by only 4°C after mixing by trituration and that it attains a value of 100°C.

Example 2

The following are mixed at 130°C:

93.8 parts by weight of a liquid polybutene identical to that used in Example 1,

6 parts by weight of a microcrystalline hydrocarbon wax consisting essentially of polyethylene, having the following characteristics:

Mean molecular mass by number measured by osmometry, 2000,

melting point, measured by scanning differential enthalpy analysis, 123°C,

distribution parameter of the crystallite dimensions, 0.140,

fusion enthalpy of 261 J/g,

density measured at 25°C, 0.96;

0.2 parts by weight of an antioxidant, identical to that used in Example 1.

After homogenisation and cooling to ambient temperature, the composition obtained possesses the following properties:

drop point prior to mixing by trituration: 112°C,

drop point after mixing by trituration: 105°C,

viscosity measured at 120°C: 94 mm²/s,

pentration measured at 20°C: 70 l/10 mm,

resistivity measured at 23°C: over 1000×10¹⁵ Ohm · cm,

resistivity measured at 100°C: 1000×10¹² Ohm · cm,

dielectric losses measured at 100°C: 0.5×10⁻⁴ radian,

dielectric losses measured at 23°C under 1 MHz: $6 \times 10^{-4}$ radian,

dielectric constant measured at 23°C under 1MHz: less than 2.3.

In particular it is found that the dropping point of the composition thus obtained decreases by only 7°C after mixing by trituration and that it maintains a relatively higher value equal to 105°C.

Example 3

The following are mixed at 120°C:

93.8 parts by weight of a liquid polybutene identical to that used in Example 1.

6 parts by weight of a microcrystalline hydrocarbon wax consisting essentially of polyethylene having the following characteristics:

mean molecular mass by number measured by osmometry of 2100,

melting point measured by scanning differential enthalpy analysis of 110°C,

distribution parameter of the crystallite dimensions of 0.15,

fusion enthalpy of 163 J/g, density measured at 25°C of 0.95,

0.2 parts by weight of antioxidant identical to that used in Example 1.

After homogenisation and cooling to ambient temperature, the compositions obtained possesses the following properties:

drop point prior to mixing by trituration: 110°C,

drop point after mixing by trituration: 105°C,

viscosity measured at 120°C: 80 mm²/s,

penetration measured at 20°C: 65 I/10 mm,

resistivity measured at 23°C: over 1000×10¹⁵ ohm · cm,

resistivity measured at 100°C: 700×10¹² ohm · cm,

dielectric losses measured at 100°C: 1×10⁻⁴ radian,

dielectric losses measured at 23°C under 1 MHz: 8×10⁻⁴ radian,

dielectric constant measured at 23°C under 1 MHz: less than 2.3.

In particular it is found that the drop point of the composition thus obtained decreases by only 6°C after mixing by trituration and that is maintains a relatively high value equal to 105°C.

Example 4

The following are mixed at 120°C:

92.8 parts by weight of a liquid polybutene sold by BP Chimie under the trade name "NAPVIS DE 30®", having the following characteristics:

mean molecular mass by number, measured by osmometry: 1350,

viscosity measured at 100°C: 650 mm²/s,

density measured at 15°C: 0.90,

resistivity measured at 100°C: 1200×10¹² Ohm · cm,

dielectric losses measured at 100°C, less than or equal to 0.1×10⁻⁴ radian,

7 parts by weight of a microcrystalline hydrocarbon wax identical to that used in Example 1,

0.2 parts by weight of an antioxidant identical to that used in Example 1.

After homogenisation and cooling to ambient temperature, the composition obtained possesses the following properties:

drop point prior to mixing by trituration: 108°C,

drop point after mixing by trituration: 105°C,

viscosity measured at 120°C: 210 mm²/s,

penetration measured at 20°C: 48 I/10 mm,

resistivity measured at 23°C: over 1000×10¹⁵ Ohm · cm,

resistivity at 100°C: 1100×10¹² Ohm · cm, dielectric losses measured at 100°C: 0.1×10⁻⁴ radian,

dielectric losses measured at 23°C under 1 MHz: 4.5×10⁻⁴ radian,

dielectric constant measured at 23°C under 1 MHz: less than 2.3.

In particular it is found that the drop point of the composition thus obtained decreases only by 3°C after mixing by trituration and that its maintains a relatively high value equal to 105°C.

Example 5

The following are mixed at 120°C:

50.5 parts by weight of a liquid polybutene identical to that used in Example 1,

41.3 parts by weight of a liquid polybutene identical to that used in Example 4,

8 parts by weight of a microcrystalline hydrocarbon wax identical to that used in Example 1,

0.2 parts by weight of an antioxidant identical to that used in Example 1.

After homogenisation and cooling to ambient temperature, the composition obtained possesses the following properties:

drop point prior to mixing by trituration: 106°C,

drop point after mixing by trituration: 102°C,

viscosity measured at 120°C: 125 mm²/s,

penetration measured at 20°C: 52 I/10 mm,

resistivity measured at 23°C: over 1000×10¹⁵ Ohm · cm,

resistivity measured at 100°C: 850×10¹² Ohm · cm,

dielectric losses measured at 100°C: 0.2×10⁻⁴ radian,

dielectric losses measured at 23°C under 1 MHz: 5×10⁻⁴ radian,

dielectric constant measured at 23°C under 1 MHz: less than 2.3.

In particular it is found that the drop point of the compositions thus obtained diminishes by only 4°C after mixing by trituration and that it maintains a relatively high value equal to 102°C.

Example 6 (Comparative)

The following are mixed at 120°C:

91.8 parts by weight of a liquid polybutene identical to with that used in Example 1,

8 parts by weight of a microcrystalline hydrocarbon wax consisting essentially of polyethylene having the following characteristics:

mean molecular mass by number measured by osmometry, of 600,

melting points, measured by scanning differential enthalpy analysis, of 78 and 103°C,

distribution parameter of crystallite dimensions of 1.774, fusion enthalpy of 193 J/g,

density measured at 25°C of 0.94.

0.2 parts by weight of an antioxidant identical to that used in Example 1.

After homogenisation and cooling to ambient temperature, the composition obtained possesses the following properties:

drop point prior to mixing by trituration: 100°C,

drop point after mixing by trituration: 78°C,

viscosity measured at 120°C: 80 mm$^2$/s,

penetration measured at 20°C: 90 l/10 mm,

resistivity measured at 23°C: over 1000×10$^{15}$ Ohm · cm,

resistivity measured at 100°C: 1000×10$^{12}$ Ohm · cm,

dielectric losses measured at 100°C: 0.1×10$^{-4}$ radian,

dielectric losses measured at 23°C under 1 MHz: 7×10$^{-4}$ radian,

dielectric constant measured at 23°C under 1 MHz: less than 2.3.

It is found that the dropping point of the composition obtained in particular by employing a microcrystalline hydrocarbon wax having a mean molecular mass by number of less than 650, decreases by 22°C after mixing by trituration and that it maintians a relatively low value equal to 78°C.

Example 7 (Comparative)

The following are mixed at 120°C:

91.8 parts by weight of a liquid polybutene identical to that used in Example 1,

8 parts by weight of a microcrystalline hydrocarbon wax consisting essentially of polyethylene, having the following characteristics:

molecular mass by number, measured by osmometry, of 3000,

melting point measured by scanning differential enthalpy analysis of 121°C,

distribution parameter of the dimensions of the crystallites of 0.072,

fusion enthalpy of 196 J/g,

density measured at 25°C of 0.95;

0.2 parts by weight of an antioxidant identical to that used in Example 1.

After homogenisation and cooling to ambient temperature, the composition obtained possesses the following properties:

drop point before mixing by trituration: 120°C,

drop point after mixing by trituration: 68°C,

viscosity measured at 120°C: 66 mm$^2$/s,

penetration measured at 20°C: 120 l/10 mm,

resistivity measured at 23°C: over 1000×10$^{15}$ Ohm · cm,

resistivity measured at 100°C: 700×10$^{12}$ Ohm · cm,

dielectric losses, measured at 100°C: 0.1×10$^{-4}$ radian,

dielectric losses measured at 23°C under 1 MHz: 4.5×10$^{-4}$ radian,

dielectric constant measured at 23°C under 1 MHz: less than 2.3.

It is found that the dropping point of the composition obtained in particular by using a microcrystalline hydrocarbon wax having a mean molecular mass by number greater than 2500, decreases by 52°C, after mixing by trituration and that it maintains a very lower value equal to 68°C.

The measurements stated in the description and the examples were performed in accordance with the following standards:

drop point: NF-T-60 102 or ASTM-D-566

viscosity: NF-T-60 100 or ASTM-D-445

penetration: NF-T-60 119 or ASTM-D-937

resistivity: NF-C-27 210 or ASTM-D-1169

dielectric losses (at 100°C): NF-C-27 210 or ASTM-D-924

dielectric losses (at 23°C) under 1MHz: ASTM-D-150

dielectric constant (at 23°C under 1 MHz): ASTM-D-150

dènsity: ASTM-D-70.

**Claims**

1. Compositions based on liquid polybutene and microcrystalline hydrocarbon waxes, having a low dielectric loss, characterised in that they comprise:

(a) from 85 to 96 parts by weight of liquid polybutene having a mean molecular mass by number of between 550 and 3000, and

(b) from 4 to 15 parts by weight of at least one microcrystalline hydrocarbon wax having a dielectric loss measured at 100°C less than or equal to 5×10$^{-4}$ radian, a mean molecular mass by number comprised between 650 and 2500 and a melting point determined by differential enthalpy analysis of between 80 and 150°C.

2. Compositions according to Claim 1, characterised in that the liquid polybutenes have a mean molecular mass by number of between 800 and 1500.

3. Compositions according to Claim 1, characterised in that the microcrystalline hydrocarbon wax has a mean molecular mass by number of between 800 and 2100.

4. Compositions according to Claim 1, characterised in that the microcrystalline hydrocarbon wax has a melting point, determined by differential enthalpy analysis, of between 100 and 130°C.

5. Compositions according to Claim 1, characterised in that the compositions also contain at least 1 antioxidant in a proportion up to approximately 1% by weight in relation to these compositions.

6. Process for the preparation of compositions according to Claim 1, characterised in that the mixing of the liquid polybutenes with the microcrystalline hydrocarbon wax or waxes is performed at a temperature comprised between 100 and 150°C.

7. Applications of the compositions according to Claim 1, for the production of telecommunication cables, electric cables, fibre optic cables and their connection accessories, and also for the

production of capacitors.

**Patentansprüche**

1. Zusammensetzungen, basierend auf flüssigem Polybuten und mikrokristallinen Kohlenwasserstoffwachsen, mit einem niedrigen dielektrischen Verlust, dadurch gekennzeichnet, daß sie sich zusammensetzen aus:

(a) von 85 bis 96 Gewichtsteilen flüssigem Polybuten mit einer Zahlermittel-Molekularmasse von 550 bis 3.000, und

(b) von 4 bis 15 Gewichtsteilen von mindestens einem mikrokristallinen Kohlenwasserstoffwachs mit einem bei 100°C gemessenen dielektrischen Verlust von weniger als oder gleich $5\times10^{-4}$ rad, einer Zahlenmittel-Molekularmasse von 650 bis 2.500 und einem durch Differentialenthalpienanalyse bestimmten Schmelzpunkt von 80 bis 150°C.

2. Zusammensetzungen nach Anspruch 1, dadurch gekennzeichnet, daß die flüssigen Polybutene eine Zahlenmittel-Molekularmasse von 800 bis 1.500 besitzen.

3. Zusammensetzungen nach Anspruch 1, dadurch gekennzeichnet, daß das mikrokristalline Kohlenwasserstoffwachs eine Zahlenmittel-Molekularmasse von 800 bis 2.100 besitzt.

4. Zuammensetzungen nach Anspruch 1, dadurch gekennzeichnet, daß das mikrokristalline Kohlenwasserstoffwachs einen durch Differentialenthalpieanalyse bestimmten Schmelzpunkt von 100 bis 130°C aufweist.

5. Zusammensetzungen nach Anspruch 1, dadurch gekennzeichnet, daß die Zusammensetzungen auch mindestens ein Antioxidans in einem Verhältnis bis zu ungefähr 1 Gew.-% in Bezug auf diese Zusammensetzungen enthalten.

6. Verfahren zur Herstellung von Zusammensetzungen nach Anspruch 1, dadurch gekennzeichnet, daß das Vermischen der flüssigen Polybutene mit dem mikrokristallinen Kohlenwasserstoffwachs oder den-wachsen bei einer Temperatur von 100 bis 150°C durchgeführt wird.

7. Anwendungen der Zusammensetzungen nach Anspruch 1 zur Herstellung von Telekommunikationskabeln, elektrischen Kabeln, optischen Faserkabeln und deren Verbindungszubehör, und auch zur Herstellung von Kondensatoren.

**Revendications**

1. Compositions à base de polybutène liquide et de cires hydrocarbonées microcristallines, ayant une faible perte diélectrique, ces compositions étant caractèrisées en ce qu'elles comprennent:

(a) de 85 à 96 parties en poids d'un polybutène liquide, ayant une masse moléculaire moyenne en nombre comprise entre 550 et 3000, et

(b) de 4 à 15 parties en poids d'au moins une cire hydrocarbonée microcristalline ayant une pertie diélectrique, mesurée à 100°C, inférieure ou égale à $5\times10^{-4}$ radian, une masse moléculaire moyenne en nombre comprise entre 650 et 2500, et un point de fusion, déterminé par analyse d'enthalpie différentielle, compris entre 80 et 150°C.

2. Compositions selon la revendication 1, caractérisées en ce que le polybutène liquide a une masse moléculaire moyenne en nombre comprise entre 800 et 1500.

3. Compositions selon la revendication 1, caractérisées en ce que la cire hydrocarbonée microcristalline a une masse moléculaire moyenne en nombre comprise entre 800 et 2100.

4. Compositions selon la revendication 1, caractérisées en ce que la cire hydrocarbonée microcristalline a un point de fusion, déterminé par analyse d'enthalpie différentielle, compris entre 100 et 130°C.

5. Compositions selon la revendication 1, caractérisées en ce que les compositions contiennent également au moins un anti-oxydant présent en une proportion pouvant aller jusqu'à environ 1% en poids par rapport à ces compositions.

6. Procédé pour la préparation de compositions selon la revendication 1, caractérisé en ce que le mélangeage de polybutènes liquides avec la ou les cires hydrocarbonée(s) microcristalline(s) est effectué à une température comprise entre 100 et 150°C.

7. Applications des compositions selon la revendications pour la production de câbles de télécommunications, de câbles électriques, de câbles à fibres optiques et de leurs accessoires de connexion et de raccordement, et aussi pour la production de condensateurs.